# EUROPEAN PATENT SPECIFICATION

(11) **EP 1 613 166 B1**
(45) Date of publication and mention of the grant of the patent: **18.11.2009**
(21) Application number: 04725729.0
(22) Date of filing: 05.04.2004
(51) Int. Cl.: A23B 7/152, A01F 25/00

(54) **APPARATUS AND METHOD FOR CONTROLLING SPROUT GROWTH IN A CROP**
VORRICHTUNG UND VERFAHREN ZUR KEIMHEMMUNG BEI ERNTEGUT
DISPOSITIF ET PROCEDE DE CONTROLE DE LA CROISSANCE DES POUSSES DANS UNE CULTURE

(30) Priority: 05.04.2003 GB 0307897
(43) Date of publication of application: 11.01.2006
(60) Divisional application: 08012757.4
(73) Proprietor: Restrain Company Limited, Doddington March Cambridgeshire PE15 0UW (GB)
(72) Inventor: COLEMAN, Paul Michael, Wisbech, Cambridgeshire PE13 5LW (GB); BISHOP, David James, Crowborough, East Sussex TN6 2RS (GB)
(74) Representative: Unwin, Stephen Geoffrey
(86) International application number: PCT/GB2004/001476
(87) International publication number: WO 2004/089093

(56) References cited:
- WO-A-01/71258
- WO-A-93/02563
- CA-A- 2 316 521
- US-A- 3 951 610
- US-A- 6 105 416
- DATABASE FSTA [Online] INTERNATIONAL FOOD INFORMATION SERVICE (IFIS), FRANkFURT-MAIN, DE; XP002308066 Database accession no. 1998-09-j2116 & PRANGE R K ET AL: "Using Ethylene as a Sprout Control Agent in Stored 'Russet Burbank' Potatoes" JOURNAL OF THE AMERICAN SOCIETY FOR HORTICULTURAL SCIENCE, vol. 123, no. 3, 1998, pages 463-469, XP001202645
- COLEMAN W K: "Carbon Dioxide, Oxygen and Ethylene Effects on Potato Tuber Dormancy Release and Sprout Growth" ANNALS OF BOTANY, vol. 82, 1998, pages 21-27, XP002308065
- DATABASE FSTA [Online] INTERNATIONAL FOOD INFORMATION SERVICE (IFIS), FRANkFURT-MAIN, DE; XP002308067 Database accession no. 72-3-03-j0444 & HAARD N F: "Differential Response of Cold Stored Potato Tubers to Ethylene" AMERICAN POTATO JOURNAL, vol. 48, no. 6, 1971, pages 183-186, XP001202646
- PATENT ABSTRACTS OF JAPAN vol. 1996, no. 09, 30 September 1996 (1996-09-30) & JP 8 116867 A (HIYOUON:KK), 14 May 1996 (1996-05-14)
- PATENT ABSTRACTS OF JAPAN vol. 1997, no. 05, 30 May 1997 (1997-05-30) & JP 9 023740 A (NORIN SUISANSYO HOKKAIDO NOGYO SHIKENJO), 28 January 1997 (1997-01-28)

## Description

The present invention relates to an apparatus for controlling the ethylene concentration in a store for above ground storage of crops such as solanum spp., allium spp., apiaceae spp., narcissis spp. and liliacae spp.. The invention also relates to a method for controlling sprout growth in a crop stored above ground after dormancy break by prolonging the natural storage period of the crop by inhibiting sprouting.

It is known to store crops of the aforementioned genera in above ground stores in controlled atmospheres where the level of ethylene and/or other gases are monitored. Ethylene concentration is commonly controlled to inhibit or induce ripening of produce.

Japanese unexamined patent publication 09273740A discloses a method and apparatus for controlling the ethylene concentration in a vegetable storage facility. The publication describes an ethylene gas generator, for example, an ethylene generating bacteria, with an associated regulator valve. At periodic intervals, a sample of the atmosphere in the storage facility is taken via an exhaust pipe. Release of the atmospheric gases is by means of a stopcock. The density of the sample is checked against a predetermined density which reflects an acceptable ratio of ethylene to air. The system suffers from a lack of accuracy and thus is not helpful in controlling ethylene concentration within a small range.

US patent 6105416 discloses an ethylene monitoring and control system. the system is provided with samples of potentially ethylene containing gas from a source, for example, the atmosphere of a fruit and vegetable store. The system comprises a test chamber into which the sample is received and a quantity of ozone is added. The ozone reacts with any ethylene in the sample so as to emit light. The quantity/frequency of the light detected from the reaction is taken as a measure of the proportion of ethylene present in the sample. A control computer responds to changes in the ethylene concentration of the tested samples to control ethylene levels in the tested environment by injection of additional ethylene gas into the tested environment or ventilation of the environment as appropriate. Whilst potentially very accurate at monitoring the ethylene concentration in samples taken, the system is expensive and potentially hazardous in its use of ozone gas.

A simple, inexpensive and safe system is required for the monitoring and controlling of ethylene concentrations in a food storage environment.

A number of methods for controlling sprout growth in a crop stored above ground exist. In one method, maleic hydrazide is applied to potato plant leaves in the field 3-7 weeks before the expected date of topkill or first frosts. In another method, chlorpropham (CIPC) is applied to stored potato tubers in the form of an aerosol after the tubers have suberized. CIPC is reapplied as required throughout the storage period. A further method is to burn out any sprouts by the application of hydrogen peroxide. It is also known to apply dimethylnaphthalate (DMN) to potato tubers in storage by aerosol application. The application is repeated as required throughout the storage period.

There is increasing consumer pressure for the food processing industry to reduce pesticide levels. Therefore it will be appreciated that one problem with the aforementioned methods is that they all involve the use of chemicals which may leave undesirable residues in the product. A further problem is that the application of such chemicals can be time consuming.

Proposed Regulatory Decision Document PRDD2001-04 discloses a method comprising applying ethylene at a concentration of up to 4 ppm to cultivar *Russet Burbank* potato tubers stored In a commercial potato store at a temperature of 9°C. The storage conditions are selected to minimise the development of sugars that are detrimental to the fry colour (lead to dark brown chips).

Onion bulbs are stored at 0.5°C from September to January. Storage from September to April is achieved under an atmosphere of low oxygen and high carbon dioxide concentrations. One disadvantage of this method is that the equipment required to maintain such an atmosphere is expensive. Furthermore, personnel cannot enter these stores without breathing apparatus. For storage from September to June, maleic hydrazide is applied to the onlon plant leaves in a manner similar to that described for potato tubers.

WO01/71758 discloses a method for regulating a controlled atmosphere for the storage of plant products in which the composition of the atmosphere (eg its O₂ and CO₂ content) is adjusted in response to measurement of trace gasses (eg ethylene or ethanol) produced by the plant products.

US3951610 discloses a gas generating apparatus, eg for generating ethylene to Initiate the ripening of fruits.

The paper "Using Ethylene as a Sprout Control Agent in stored Russet Burbank potatoes" by Prange RK et al, Journal of the American Society for Horticultural Science, Vol 123(3), 1998, pages 463-469 discloses tests carried out on the effect of ethylene on tuber sprout growth and quality on potatoes and found that continuous exposure to ethylene was an effective sprout growth control but produced a darker fry colour compound to CIPC-treated potatoes.

### Summary of the Invention

The present Invention aims to address the problems and disadvantages of existing apparatus for controlling the ethylene concentration In a store for above ground storage of crops and the problems and disadvantages of existing methods previously discussed for controlling sprout growth In crops stored above ground.

In a first aspect, the invention provides an apparatus for controlling the ethylene concentration In a crop storage facility, the apparatus comprising an ethylene generator, an ethylene concentration sensor and an ethylene concentration controller, the ethylene concentration controller being configured, in use, to be responsive to a signal from the ethylene concentration sensor, which signal corresponds to the ethylene concentration in the facility at any given time, to initiate the release of ethylene from the ethylene generator only when the signal indicates that the ethylene concentration has fallen below a pre-selected minimum desirable ethylene concentration in the facility and responsive to the signal from the ethylene concentration sensor to arrest the release of ethylene from the ethylene generator when the signal corresponds to an ethylene concentration greater than or equal to a pre-selected maximum ethylene concentration in the facility, thereby to maintain the ethylene concentration within a range defined by the pre-selected minimum and maximum desirable ethylene concentrations and wherein the ethylene generator comprises a source of ethylene precursor and a catalyst for catalysing the production of ethylene from the ethylene precursor, the ethylene controller being responsive to a signal from the ethylene concentration sensor to initiate or inhibit interaction between the catalyst and the ethylene precursor.

Desirably the pre-selected minimum ethylene concentration is 5 ppm and preferably 8 ppm.

Desirably the pre-selected maximum ethylene concentration Is 30 ppm and preferably 13 ppm. In pre-selecting a maximum ethylene concentration, the release of ethylene can be optimised to prolong the natural storage period of a crop without needlessly wasting ethylene.

The sensor may take any conventional form, for example (but not strictly limited to; Infra-red, electro-luminescent, chromatographic or catalytic bead.

In a particular embodiment, the ethylene concentration sensor is an electrochemical sensor, although other forms of ethylene concentration sensor may be used. The sensor is robust, accurate, sensitive and cost effective.

The catalytic ethylene generator preferably comprises a catalyst which, in use, converts a feedstock of ethanol to ethylene (i.e., the ethylene precursor Is ethanol). Storage and refilling of this feedstock Is less tiresome and considered safer than use of compressed ethylene gas in a cylinder. Normal safe practice for banana ripening room ethylene injection from a cylinder is to use a cylinder containing ethylene mixed with air or nitrogen so that the mixture is below the explosive limit. This is then safe but more expensive.

The catalytic ethylene generator may comprise a catalyst heater, a catalyst temperature controller and a catalyst temperature sensor, the catalyst temperature controller operating the catalyst heater and being configured to be responsive to a signal from the catalyst temperature sensor, which signal corresponds to the catalyst temperature at any given time, to switch on the catalyst heater when the signal indicates that the catalyst temperature has fallen below a pre-selected desirable catalyst temperature thereby to maintain the catalyst temperature above the pre-selected desirable catalyst temperature. The ethylene concentration controller may include the catalyst temperature controller. Optionally, the ethylene temperature controller may be responsive to a signal from the ethylene concentration sensor to initiate or inhibit heating of the catalyst, thereby to alter the rate at which ethylene is being introduced into the storage facility.

Optionally the catalytic ethylene generator further comprises a valve for controlling the release of ethylene precursor to the catalyst, the valve being operated by the ethylene concentration controller, the ethylene concentration controller being configured to open the valve to release ethylene precursor to the catalyst only after the catalyst temperature sensor indicates to the catalyst temperature controller that the catalyst temperature is at or above a pre-selected minimum catalyst temperature.

Alternatively, the catalytic ethylene generator can further comprise a valve for controlling the release of ethylene precursor to the catalyst, the valve being operated by the catalyst temperature controller, the catalyst temperature controller being configured, in use, to be responsive to a signal from the catalyst temperature sensor, which signal corresponds to the catalyst temperature at any given time, to open the valve to release generator feedstock to the catalyst when the signal corresponds to a catalyst temperature at or above a pre-selected minimum desirable catalyst temperature. Pre-heating the catalyst optimises conversion of ethylene precursor by the catalyst.

A metering system may be provided for metering the supply of ethylene precursor to the catalyst. The metering system may, optionally, comprise an injection chamber equipped with a capacity sensor, the injection chamber being in communication with a supply of the precursor via a first valve which first valve is responsive to the output of the capacity sensor to close when a predetermined capacity is reached, and In communication with a catalyst chamber via a second valve, the first and second valve being operable independently of each other. Optionally, the capacity sensor is an optical level sensor.

Desirably, the first and second valves comprise solenoid valves powered through a single changeover relay circuit such that, at any given time, only one of the valves can be opened.

Operation of the valves is desirably controlled by the ethylene concentration controller, the controller being configured to open the second valve in a series of pulses whereby to gradually empty the injection chamber Into the catalyst chamber. The frequency and/or period of the pulses can, optionally, be adjustable, thus the controller can be programmed to release precursor to the catalyst chamber at a predetermined rate selected to result in maintenance of a desired ethylene concentration in the crop storage facility. Conveniently, the frequency and/or period of the pulses can be actively adjusted in response to the signal from the ethylene concentration sensor. For example, if the sensor detects a quantifiable drop In the ethylene concentration, the frequency and/or period may be Increased by a proportional amount whereby to increase the rate of ethylene production sufficient to return the concentration to a desired optimum level, without significantly overshooting that level.

Where a catalyst heater is included in the generator, the heater may, optionally, comprise a heating element embedded in the catalyst so as to heat the catalyst from within. In another option, the catalyst heater may be associated with heat conductive walls of a catalyst chamber containing the catalyst.

In conventional designs of catalytic ethylene generator, the catalyst has been heated with an electrical heater element (immersion heater style) embedded within the bulk of the catalyst. Typically, the catalyst material is an excellent heat insulator and consequently, this heating method can result in large temperature gradients with only a small portion of the total catalyst being at the optimum temperature for catalysis. In one optional embodiment of the Invention, therefore, the ethylene generator Is provided with a tubular catalyst chamber for containing the catalyst the walls of which are constructed from material of high thermal capacity. Heaters are provided externally of the chamber giving thermal gradients within the chamber of less than 10 degrees Celsius, significantly less than the gradients exhibited in the prior art arrangement. This more uniform temperature of the catalyst results in a much greater efficiency in the conversion of precursor to ethylene and a significant reduction in undesirable side reactions which can contaminate the ethylene and reduce the catalyst life.

In a further aspect of the invention, a crop storage facility comprising an apparatus for controlling the ethylene concentration in a crop storage facility as described hereinbefore is provided.

The apparatus can be used in a method for controlling sprout growth In a crop selected from the genera; solanum spp., allium spp., aplaceae spp., narcissis spp. and liliacae spp. stored above ground comprising the steps of:
a. storing a crop under an atmosphere of air at a temperature of less than 9°C for up to 4 months;
b. storing the crop under an atmosphere comprising ethylene at a concentration greater than 4 ppm at a temperature of less than 9°C for up to 12 months; and c. removing the crop from storage under the said ethylene atmosphere for subsequent packaging.

Optionally the method for controlling- sprout growth crop additionally comprises the step of de-gassing the crop after removal from storage under the ethylene atmosphere and prior to packaging.

The method for controlling sprout growth crop may additionally include a step of packaging the crop, the step of packaging comprising bagging the crop under a vacuum or an atmosphere comprising either oxygen at a concentration in the range 3-10% v/v and carbon dioxide at a concentration In the range 1-6% v/v, or oxygen at a concentration in greater than or equal to 80% v/v thereby to prolong the natural storage period of the crop.

The temperatures of steps 'a.' and/or'b.' are desirably in the range 0-8°C. For solanum spp. including potatoes, the temperature is preferably In the range 2-6°C, more preferably In the range 3-5°C and optimally 3.5°C. For Allium spp. Including onions, the temperature is desirably about 0°C.

The ethylene concentration is desirably in the range 5-30 ppm, preferably in the range 7-15 ppm, more preferably in the range 9-11 ppm, optimally 10 ppm.

The crop can be stored under an atmosphere of air for 3 months or less, but more preferably for 2 months or less.

The crop can be stored under an atmosphere comprising ethylene for 10 months or less, desirably 8 months or less, optionally 6 months or less or optionally 4 months or less.

The crop can be selected from the genera; solanum spp., allium spp., apiaceae spp., narclssls spp. and liliacae spp., specific examples of which may include but are not strictly limited to: potatoes, onion bulbs, garlic, carrots, parsnips, leeks, scallions, bean sprouts, flower bulbs (e.g. daffodil, lily, tulip).

### Brief Description of the Figures

The invention will now be exemplified with reference to the accompanying Figures in which;
Figure 1 shows a block diagram of an apparatus for controlling the atmospheric ethylene concentration in a crop storage facility in accordance with one embodiment of the invention.
Figure 2 shows in more detail one embodiment of a catalytic ethylene generator for use in the apparatus of the invention.

### Detailed Description of the Invention

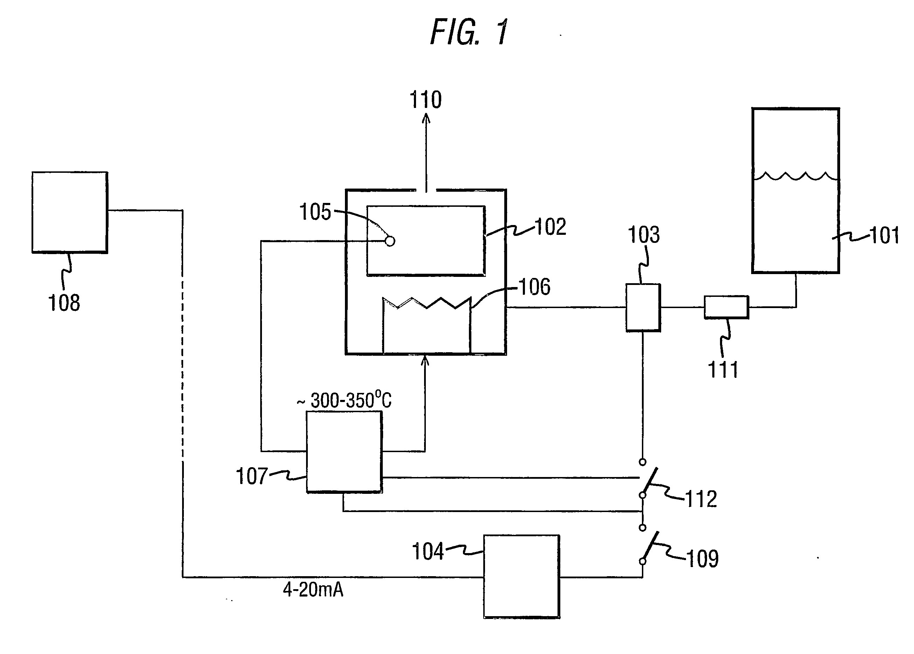

Figure 1 illustrates a catalytic ethylene generator. In operation of the generator, ethanol (101) is metered under gravity to a catalyst (102), comprising alumina silicate pellets, via a restrictor (111) and/or a solenoid valve (103). The catalyst (102) converts ethanol to ethylene whereupon it is vented to the atmosphere (110). The solenoid valve (103) is controlled by an ethylene concentration controller (104) via a three-way switch (109).

The switch (109) connects the ethylene concentration controller (104) to a catalyst temperature controller (107) and the solenoid valve (103), the latter only through a low temperature switch (112). The catalyst temperature controller (107) is only operable when the switch (109) is closed.

The catalyst temperature controller (107) operates a catalyst heater (106), comprising a resistance wire, which heats the catalyst (102) to the required operating temperature of approximately 300-350°C. The catalyst temperature controller (107) monitors a signal from a catalyst temperature sensor (105), which corresponds to the catalyst temperature, against the required operating temperature, the latter being preprogrammed into the catalyst temperature controller (107). If the catalyst temperature falls below the required operating temperature, the catalyst temperature controller (107) switches on the catalyst heater (106). If the catalyst temperature rises above the required operating temperature, the catalyst temperature controller (107) switches off the catalyst heater (106).

The low temperature switch (112) remains in an open position when the catalyst temperature is below a minimum catalyst temperature programmed into the catalyst temperature controller (107). This minimum catalyst temperature is about 25°C below the required catalyst operating temperature.

An ethylene concentration sensor (108) (Type ICA512 R from International Controlled Atmospheres Limited), comprising an electrochemical sensor and conditioning circuits, is in communication with the ethylene concentration controller (104) providing a 4-20 mA signal corresponding to the ethylene concentration in the locality of the ethylene concentration sensor (108). The ethylene concentration sensor (108) is located, often remote from the apparatus, within the crop store where a representative ethylene concentration can be measured.

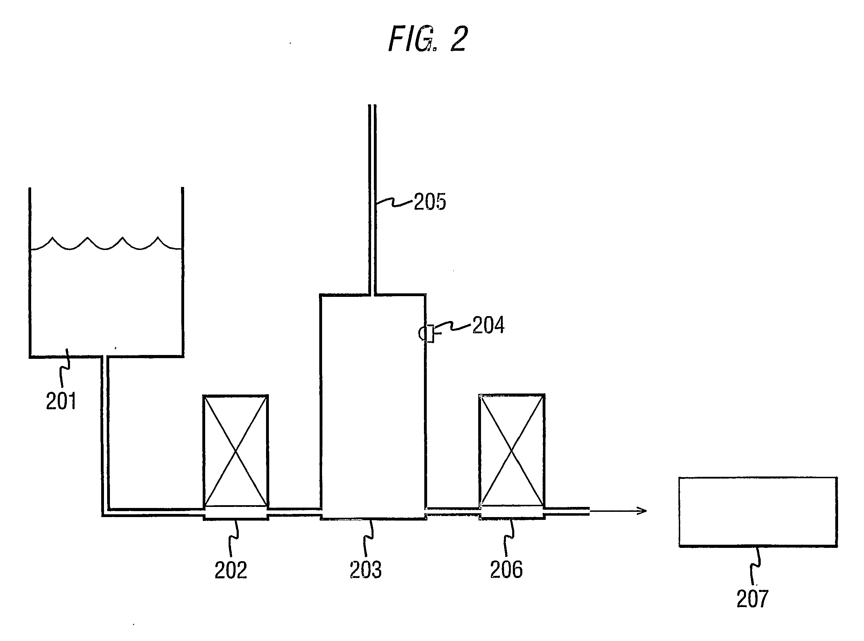

Figure 2 shows tank 201 in which is provided a source of ethylene precursor, for example ethanol. The tank typically has a capacity of about 20L. A solenoid valve 202 controls flow of the precursor from the tank 201 to an injection chamber 203 via a conduit which connects the tank with the bottom of the injection chamber 203. The injection chamber 203 is provided with a vent 205 at its top end and a second conduit which leads to a catalyst chamber 207. Flow of ethanol in the second conduit is controlled by a second solenoid valve 206. The injection chamber 203 includes an optical level sensor 204.

When it is desired to introduce ethylene into a storage facility, the solenoid valve 202 is opened and precursor flows through the first conduit and into injection chamber 203. Air in the injection chamber is vented through vent 205 and replaced by ethanol. Once the ethanol level exceeds the level of the sensor 204, the controller responds to the output of the level sensor 204 to close solenoid valve 202.

Subsequently, the second solenoid valve 206 is caused to pulse for a series of short pulses sufficient to empty the injection chamber 203. The contents of the injection chamber 203 discharges with the aid of gravity and is received in the catalyst chamber 207. The period and/or frequency of pulses of solenoid 206 can be adapted to meter predetermined quantities of precursor to the catalyst chamber 207 thereby controlling the rate of production and delivery of ethylene to the storage facility. Thus the ethylene concentration in the storage environment can be maintained within a close tolerance of a desired concentration. The desired concentration may be programmable into the controller and may vary depending on the specific requirements of the genus of crop in storage.

Once a series of pulses of the second solenoid valve 206 is complete, that valve closes and the first solenoid valve 202 is re-opened so as to refill the injection chamber 203. The controller can monitor usage of the precursor by counting the number of delivery cycles to the injection chamber, multiplying this by the capacity measured by the level sensor 204 and deducting this from a known capacity of precursor provided in the tank 301. When the quantity of precursor remaining falls below a predetermined minimum (for example, when only sufficient remains for 24 hours of operation at the current setting) an alarm can be triggered to alert a system supervisor of a need to provide more precursor.

The solenoids valves 202 and 206 are powered by a single change over relay contact so that only one of the valves can be open at any given time. This is an important safety feature of the machine as it prevents flooding of the catalyst with precursor.

The solenoid 202, chamber 203, solenoid 206 and the level sensor 204 are integrated into a single compact assembly together with a controlling electronic circuit that provides the timing, logic and safety functions for the metering module described above.

The electronic circuit is used to control the frequency an/or period of operation of solenoid 206. The frequency and/or period of operation of this valve 206 controls the rate of ethanol flow to the catalytic converter in the catalyst chamber 207. This flow rate can be set over the range 0 to a maximum (typically 4 litres/day). The frequency is adjustable by adjustment of an input voltage provided to the circuit. (Typically varying from 0 to 8 v).

The input voltage for the metering module is provided by the ethylene concentration controller 104 and this can operate in one of three distinct modes.

### Mode 1

When the ethylene concentration measured by the sensor 108 is below a predetermined minimum value, the catalyst heater is turned ON. When the heater has reached the optimum temperature for catalysis of the precursor, (under the control of the catalyst temperature controller), power is supplied to the previously described ethanol metering module which meters ethanol at a maximum output rate into the heated catalyst chamber. This continues until the ethylene in the room measured by the sensor (108) reaches the pre-selected maximum ethylene concentration desired for the facility. When this concentration is reached, the flow of ethanol is stopped and the power to the catalyst temperature controller is cut. The mode is cyclic, when the ethylene concentration falls below the minimum, the cycle restarts.

### Mode 2

When power is supplied to the ethylene generator, the heaters are maintained ON and controlled at the optimum temperature for catalysis. The precursor can be metered as follows provided the temperature of the catalyst chamber remains within preset limits.

The metered output rate of the precursor can be set on the ethylene concentration controller to be at a fixed rate to suit the storage facility whose environment is to be controlled. This can be anywhere between 0 and the maximum output. When the ethylene concentration in the storage facility falls below the pre-selected minimum, the precursor is metered into the catalyst at the preset rate. When the ethylene concentration exceeds the pre-selected maximum ethylene concentration, the metering is stopped until the ethylene concentration falls below the pre-selected minimum concentration, at which time the sequence is repeated.

### Mode 3

When power is supplied to the machine the catalyst heater is maintained on and controlled at the optimum temperature for catalysis. The precursor can be metered as follows provided the temperature of the catalyst chamber remains within preset limits (for example by the catalyst temperature controller).

The ethylene controller 104 in this mode is a proportional controller so that the voltage output to the rate of delivery of precursor to the catalyst provided by the metering module becomes proportional to the error between the measured ethylene concentration in the storage facility and a pre-selected optimum concentration. The voltage input to the metering module controls the flow rate of the precursor and its rate of delivery to the catalyst chamber, thus providing a substantially continuous rate of ethylene production to meet the specific requirements of the facility. This mode offers both an offset and an integral function to provide accurate control of the ethylene concentration in the facility.

Operation of the apparatus exemplified in Figure 1 after installation in a store for above ground storage of crops is set out below.

The ethylene generator is loaded with ethanol and activated together with the apparatus. The ethylene concentration controller (104) is programmed with desired minimum and maximum ethylene concentrations.

The ethylene concentration sensor (108) measures the ethylene concentration within the store and transmits a signal corresponding to that ethylene concentration to the ethylene concentration controller (104). The ethylene concentration controller (104) monitors the signal from the ethylene concentration sensor (108) and checks if the signal falls outside the pre-defined minimum and maximum ethylene concentrations. When the signal from the ethylene concentration sensor (108) indicates that the ethylene concentration in the store has fallen below the pre-defined minimum ethylene concentration, the following sequence of events occurs.

The ethylene concentration controller (104) closes the switch (109) to complete a circuit between the ethylene concentration controller (104) and the catalyst temperature controller (107). The catalyst temperature controller (107) is hence activated by the ethylene concentration controller (104) and operates the catalyst heater (106) thereby heating the catalyst to the required operating temperature. Operation of the catalyst heater (106) has been described herein above.

When the catalyst temperature has increased above the programmed minimum catalyst temperature, the catalyst temperature controller (107) closes the low temperature switch (112) thereby permitting the ethylene concentration controller (104) to energise and open the solenoid valve (103) allowing the ethanol (101) to flow into the heated catalyst (102) whereupon it is converted to ethylene.

When the signal from the ethylene concentration sensor (108) indicates that the ethylene concentration in the storage room has risen above the pre-defined maximum ethylene concentration, the ethylene concentration controller (104) opens the switch (109) which de-energises the solenoid valve (103) and deactivates the catalyst temperature controller (107). The flow of the ethanol (101) ceases and the catalyst (102) cools down.

There now follows a description of an experimental trial by the inventors using the aforementioned apparatus and method.

A commercial potato store was filled during the first week of November 2001 with 26 boxes of cultivar *Maris Piper* (27.36 tonnes), 7 boxes of cultivar *King Edward* (7.385 tonnes), 140 boxes of cultivar *Estima* (149.3 tonnes) and 50 boxes of cultivar *Nadine* (48.968 tonnes) potato tubers. An Easy-Ripe (RTM) ethylene generator (Catalytic Generators Inc.) was installed in the store on 7 November 2001. The temperature of the store was set at 3.5°C.

The generator was activated on the 8 November 2001 for 3-4 hours at an ethanol conversion rate of one litre every 48 hours. On expiry of this time period, the ethylene concentration had reached 10 ppm as measured with a Kitagawa tube (a tube containing ethylene concentration sensitive colour indicating crystals). A timer switch was installed on 9 November 2001 to allow the generator to be controlled automatically over a 24 hour period. By 13 November 2001, consistent ethylene concentrations of 10 ppm were achieved by activating the generator for half an hour in every 2 hour period (6 hours daily).

On 29 January 2002, ethylene concentration regulation apparatus in accordance with Figure 1 was installed and activated. Minimum and maximum ethylene concentrations of 8 ppm and 13 ppm respectively were selected.

The results of this trial were that the *Maris Piper* potato tubers started to sprout in mid-December but they did not develop beyond 1-2 mm. There was no visible sprouting with cultivars *King Edward, Estima* and *Nadine* until the end of the trial at the beginning of July 2002. By way of comparison, CIPC treated potato tubers would be expected to have sprouts of less than 1 mm and untreated potato tubers sprout lengths in the range 3-15 mm.

## Claims

1. An apparatus for controlling the ethylene concentration in a crop storage facility, the apparatus comprising an ethylene generator, an ethylene concentration sensor (108) and an ethylene concentration controller (104), the ethylene concentration controller (104) being configured, in use, to be responsive to a signal from the ethylene concentration sensor (108), which signal corresponds to the ethylene concentration in the facility at any given time, to Initiate the release of ethylene (110) from the ethylene generator only when the signal indicates that the ethylene concentration has fallen below a pre-selected minimum desirable ethylene concentration In the facility and responsive to the signal from the ethylene concentration sensor (108) to arrest the release of ethylene (110) from the ethylene generator when the signal corresponds to an ethylene concentration greater than or equal to a pre-selected maximum ethylene concentration in the facility, thereby to maintain the ethylene concentration within a range defined by the pre-selected minimum and maximum desirable ethylene concentrations and wherein the ethylene generator comprises a source (101) of ethylene precursor and a catalyst (102) for catalysing the production of ethylene from the ethylene precursor, the ethylene controller (104) being responsive to a signal from the ethylene concentration sensor (108) to initiate or inhibit interaction between the catalyst (102) and the ethylene precursor.

2. An apparatus for controlling the ethylene concentration in a crop storage facility according to claim 1 wherein the ethylene concentration sensor (108) is an electrochemical sensor.

3. An apparatus for controlling the ethylene concentration in a crop storage facility according to claim 1 or claim 2 wherein the pre-selected minimum desirable ethylene concentration is 5 ppm.

4. An apparatus for controlling the ethylene concentration in a crop storage facility according to any one of claims 1-3 wherein the pre-selected minimum desirable ethylene concentration is 8 ppm.

5. An apparatus for controlling the ethylene concentration In a crop storage facility according to any one of claims 1-4 wherein the pre-selected maximum desirable ethylene concentration Is 30 ppm.

6. An apparatus for controlling the ethylene concentration in a crop storage facility according to any one of claims 1-5 wherein the pre-selected maximum desirable ethylene concentration is 13 ppm.

7. An apparatus for controlling the ethylene concentration in a crop storage facility according to any of claims 1 to 6 wherein the catalytic ethylene generator comprises a catalyst heater (106) and the ethylene concentration controller (104) comprises a catalyst temperature controller (107), the catalyst temperature controller (107) operating the catalyst heater (106) and being configured to be responsive to a signal from the ethylene concentration sensor (108) to initiate or inhibit heating of the catalyst heater (106).

8. An apparatus for controlling the ethylene concentration In a crop storage facility according to claim 7 wherein the catalytic ethylene generator further comprises one or more valves (103) for controlling the release of ethylene precursor to the catalyst (102), the valve(s) (103) being operated by the ethylene concentration controller (104), the ethylene concentration controller (104) being configured to open a valve (103) to release ethylene precursor to the catalyst (102) only after a catalyst temperature sensor (105) indicates to the catalyst temperature controller (107) that the catalyst temperature is at or above a pre-selected minimum catalyst temperature.

9. An apparatus for controlling the ethylene concentration in a crop storage facility according to any of claims 1 to 8 wherein the catalytic ethylene generator further comprises one or more valves (103) for controlling the release of ethylene precursor to the catalyst (102), the valve(s) (103) being operated by the ethylene concentration controller (104), the ethylene concentration controller (104) being responsive to the signal from the ethylene concentration sensor (108) to open or close a valve (103) to release or inhibit ethylene precursor to the catalyst (102).

10. An apparatus as claimed in any preceding claim further comprising a metering system for metering the delivery of ethylene precursor to the catalyst (102).

11. An apparatus as claimed in claim 10 wherein the metering system comprises an injection chamber (203) equipped with a capacity sensor (204), the injection chamber (203) being in communication with a supply (201) of the precursor via a first valve (202) which first valve (202) is responsive to the output of the capacity sensor (204) to close when a predetermined capacity is reached, and in communication with a catalyst chamber (207) via a second valve (206), the first and second valves (202,206) being operable independently of each other.

12. An apparatus as claimed in claim 11 wherein the first and second valves (202,206) comprise solenoid valves powered through a single changeover relay circuit such that, at any given time, only one of the valves (202,206) can be opened.

13. An apparatus as claimed in claim 12 wherein the controller (104) is configured to open the second valve (206) in a series of pulses whereby to gradually empty the injection chamber (203) into the catalyst chamber (207).

14. An apparatus as claimed in claim 13 wherein the controller (104) is configured to permit adjustment of the frequency and/or period of the pulses.

15. An apparatus as claimed in claim 14 wherein the frequency and/or period of the pulses can be actively adjusted in response to the signal from the ethylene concentration sensor (108).

16. An apparatus as claimed in any preceding claim wherein the ethylene generator includes a catalyst chamber (207) including a heating element within the chamber, the heating element, in use, being embedded in the catalyst.

17. An apparatus as claimed in any of claims 1 to 15 wherein the ethylene generator includes a tubular catalyst chamber (207) having thermally conductive walls and a heater disposed externally of but in association with the walls whereby, in use, to heat the catalyst by conduction through the walls of the chamber (207).

18. An apparatus as claimed in any preceding claim wherein the ethylene precursor is liquid ethanol.

19. A crop storage facility comprising an apparatus for controlling the ethylene concentration in a crop storage facility according to any one of the preceding claims.

## Patentansprüche

1. Eine Vorrichtung zur Steuerung der Ethylenkonzentration in einer Pflanzenlagerstätte,
wobei das Gerät einen Ethylengenerator, einen Ethylenkonzentrationssensor (108) und einen Ethylenkonzentrationsregler (104) umfasst, wobei der Ethylenkonzentrationsregler (104) bei Betrieb so konfiguriert ist, dass er auf ein Signal von dem Ethylenkonzentrationssensor (108) reagiert, welches der Ethylenkonzentration in der Lagerstätte zu jedem beliebigen Zeitpunkt entspricht, um die Freigabe von Ethylen (110) von dem Ethylengenerator auszulösen, jedoch nur, wenn das Signal angibt, dass die Ethylenkonzentration unter eine vorgewählte erwünschte Mindestethylenkonzentration in der Lagerstätte gefallen ist und dass der Ethylenkonzentrationsregler (104) auf das Signal von dem Ethylenkonzentrationssensor (108) reagiert, um die Freigabe von Ethylen (110) von dem Ethylengenerator zu hemmen, wenn das Signal einer Ethylenkonzentration entspricht, die größer oder gleich einer vorgewählten Höchstethylenkonzentration in der Lagerstätte ist, wobei hier die Ethylenkonzentration in einem Bereich aufrechterhalten wird, welcher durch die erwünschten Mindest- und Höchstethylenkonzentrationen bestimmt ist und wobei der Ethylengenerator eine Quelle (101) eines Ethylenvorläufers und einen Katalysator (102) zur Katalysierung der Ethylenproduktion von dem Ethylenvorläufer umfasst, wobei der Ethylenregler (104) auf ein Signal von dem Ethylenkonzentrationssensor (108) zur Auslösung oder Verhinderung einer Wechselwirkung zwischen dem Katalysator (102) und dem Ethylenvorläufer reagiert.

2. Eine Vorrichtung zur Steuerung der Ethylenkonzentration in einer Pflanzenlagerstätte gemäß Anspruch 1, wobei es sich bei dem Ethylenkonzentrationssensor (108) um einen elektrochemischen Sensor handelt.

3. Eine Vorrichtung zur Steuerung der Ethylenkonzentration in einer Pflanzenlagerstätte gemäß Anspruch 1 oder Anspruch 2, wobei die vorgewählte erwünschte Mindestethylenkonzentration bei 5 ppm liegt.

4. Eine Vorrichtung zur Steuerung der Ethylenkonzentration in einer Pflanzenlagerstätte gemäß einem der Ansprüche von 1 - 3, wobei die vorgewählte erwünschte Mindestethylenkonzentration bei 8 ppm liegt.

5. Eine Vorrichtung zur Steuerung der Ethylenkonzentration in einer Pflanzenlagerstätte gemäß einem der Ansprüche von 1 - 4, wobei die vorgewählte erwünschte Höchstethylenkonzentration bei 30 ppm liegt.

6. Eine Vorrichtung zur Steuerung der Ethylenkonzentration in einer Pflanzenlagerstätte gemäß einem der Ansprüche von 1 - 5, wobei die vorgewählte erwünschte Höchstethylenkonzentration bei 13 ppm liegt.

7. Eine Vorrichtung zur Steuerung der Ethylenkonzentration in einer Pflanzenlagerstätte gemäß einem der Ansprüche von 1 - 6, wobei der katalytische Ethylengenerator ein Katalysatorheizgerät (106) umfasst und der Ethylenkonzentrationsregler (104) einen Katalysatortemperaturregler (107) umfasst, wobei der Katalysatortemperaturregler (107) das Katalysatorheizgerät (106) betreibt und so konfiguriert ist, dass er auf ein Signal von dem Ethylenkonzentrationssensor (108) zur Auslösung oder Hemmung der Heizung des Katalysatorheizgerätes (106) reagiert.

8. Eine Vorrichtung zur Steuerung der Ethylenkonzentration in einer Pflanzenlagerstätte gemäß Anspruch 7, wobei der katalytische Ethylengenerator weiterhin ein oder mehrere Ventil(e) (103) zur Steuerung der Freigabe des Ethylenvorläufers an den Katalysator (102) umfasst, wobei das / die Ventil(e) (103) durch den Ethylenkonzentrationsregler (104) betrieben wird / werden und der Ethylenkonzentrationsregler (104) so konfiguriert ist, dass er ein Ventil (103) zur Freigabe des Ethylenvorläufers an den Katalysator (102) öffnet, jedoch erst, nachdem ein Katalysatortemperatursensor (105) dem Katalysatortemperaturregler (107) angibt, dass die Katalysatortemperatur bei oder über einer vorgewählten Mindestkatalysatortemperatur liegt.

9. Eine Vorrichtung zur Steuerung der Ethylenkonzentration in einer Pflanzenlagerstätte gemäß einem der Ansprüche von 1 - 8, wobei der katalytische Ethylengenerator weiterhin ein oder mehrere Ventil(e) (103) zur Steuerung der Freigabe des Ethylenvorläufers an den Katalysator (102) umfasst, wobei diese(s) Ventil(e) (103) durch den Ethylenkonzentrationsregler (104) betrieben wird / werden und der Ethylenkonzentrationsregler (104) auf das Signal von dem Katalysatortemperatursensor (108) zur Öffnung oder Schließung eines Ventils (103) reagiert, um den Ethylenvorläufers an den Katalysator (102) freizugeben oder diesen zu hemmen.

10. Eine Vorrichtung gemäß allen vorhergehenden Ansprüchen, die ein Messsystem zur Messung der Zuführung des Ethylenvorläufers an den Katalysator (102) umfasst.

11. Eine Vorrichtung gemäß Anspruch 10, wobei das Messsystem eine Einspritzkammer (203) umfasst, die mit einem Kapazitätssensor (204) ausgestattet ist, wobei die Einspritzkammer (203) mit einer Zufuhr (201) des Vorläufers über das erste Ventil (202) in Verbindung steht, welches erste Ventil (202) auf den Ausstoß des Kapazitätssensors (204) zur Schließung reagiert, wenn eine vorbestimmte Kapazität erreicht ist und über ein zweites Ventil (206) mit einer Katalysatorkammer (207) in Verbindung steht, wobei das erste und das zweite Ventil (202, 206) unabhängig voneinander betrieben werden können.

12. Eine Vorrichtung gemäß Anspruch 11, wobei das erste und das zweite Ventil (202, 206) Magnetventile umfassen, welche durch eine einzige Umschaltrelaisschaltung so betrieben werden, dass immer nur eines der Ventile (202, 206) geöffnet werden kann.

13. Eine Vorrichtung gemäß Anspruch 12, wobei der Regler (104) so konfiguriert ist, dass er das zweite Ventil (206) in einer Reihe von Impulsen öffnet,
wobei die Einspritzkammer (203) schrittweise in die Katalysatorkammer (207) geleert wird.

14. Eine Vorrichtung gemäß Anspruch 13, wobei der Regler (104) so konfiguriert ist, dass eine Anpassung der Frequenz und / oder Dauer der Impulse ermöglicht wird.

15. Eine Vorrichtung gemäß Anspruch 14, wobei die Frequenz und / oder Dauer der Impulse aktiv als Antwort auf das Signal von dem Ethylenkonzentrationssensor (108) angepasst werden können.

16. Eine Vorrichtung gemäß jedem beliebigen vorhergehenden Anspruch, wobei der Ethylengenerator eine Katalysatorkammer (207) enthält, welche ein Heizelement in der Kammer enthält und wobei das Heizelement bei Betrieb in dem Katalysator eingelagert ist.

17. Eine Vorrichtung gemäß einem der Ansprüche von 1 bis 15, wobei der Ethylengenerator eine schlauchförmige Katalysatorkammer (207) enthält, welche thermisch leitfähige Wände und ein Heizgerät aufweist, das extern beseitigt wurde aber in Verbindung mit den Wänden bei Betrieb den Katalysator mittels Konduktion durch die Wände der Kammer (207) erwärmt.

18. Eine Vorrichtung gemäß jedem beliebigen vorhergehenden Anspruch, wobei es sich bei dem Ethylenvorläufer um flüssiges Ethanol handelt.

19. Eine Pflanzenlagerstätte, die eine Vorrichtung zur Steuerung der Ethylenkonzentration in einer Pflanzenlagerstätte umfasst gemäß jedem beliebigen vorhergehenden Anspruch.

## Revendications

1. Un appareil pour contrôler la concentration d'éthylène dans une installation pour le stockage de récoltes, cet appareil se composant d'un générateur d'éthylène, d'un détecteur de concentration d'éthylène (108) et d'un contrôleur de concentration d'éthylène (104), le contrôleur de concentration d'éthylène (104) étant configuré, en cours d'usage, de façon à réagir à un signal provenant du détecteur de concentration d'éthylène (108), ledit signal correspondant à la concentration d'éthylène dans l'installation à un moment donné, pour déclencher le dégagement d'éthylène (110) du générateur d'éthylène seulement lorsque le signal indique que la concentration d'éthylène a baissé au-dessous d'une concentration minimale présélectionnée désirable d'éthylène dans l'installation, et à réagir au signal du détecteur de concentration d'éthylène (108) pour arrêter la décharge d'éthylène (110) du générateur d'éthylène lorsque le signal correspond à une concentration d'éthylène supérieure ou égale à la concentration maximale présélectionnée d'éthylène dans l'installation, afin de maintenir la concentration d'éthylène dans une plage définie par les concentrations minimale et maximale présélectionnées désirables d'éthylène, dans laquelle le générateur d'éthylène comprend une source (101) de précurseur d'éthylène et un catalyseur (102) pour catalyser la production d'éthylène à partir du précurseur d'éthylène, le contrôleur d'éthylène (104) réagissant à un signal du détecteur de concentration d'éthylène (108) pour déclencher ou inhiber l'interaction entre le catalyseur (102) et le précurseur d'éthylène.

2. Un appareil pour contrôler la concentration d'éthylène dans une installation pour le stockage de récoltes conforme à la revendication 1, dans lequel le détecteur de concentration d'éthylène (108) est un détecteur électrochimique.

3. Un appareil pour contrôler la concentration d'éthylène dans une installation pour le stockage de récoltes conforme à la revendication 1 ou à la revendication 2, dans lequel la concentration minimale présélectionnée désirable d'éthylène est 5 ppm.

4. Un appareil pour contrôler la concentration d'éthylène dans une installation pour le stockage de récoltes conforme à une quelconque des revendications 1 à 3, dans lequel la concentration minimale présélectionnée désirable d'éthylène est 8 ppm.

5. Un appareil pour contrôler la concentration d'éthylène dans une installation pour le stockage de récoltes conforme à une quelconque des revendications 1 à 4, dans lequel la concentration maximale présélectionnée désirable d'éthylène est 30 ppm.

6. Un appareil pour contrôler la concentration d'éthylène dans une installation pour le stockage de récoltes conforme à une quelconque des revendications 1 à 5, dans lequel la concentration maximale présélectionnée désirable d'éthylène est 13 ppm.

7. Un appareil pour contrôler la concentration d'éthylène dans une installation pour le stockage de récoltes conforme à une quelconque des revendications 1 à 6, dans lequel le générateur d'éthylène catalytique comprend un réchauffeur de catalyseur (106) et le contrôleur de concentration d'éthylène (104) comprend un contrôleur de température du catalyseur (107), le contrôleur de température du catalyseur (107) actionnant le réchauffeur de catalyseur (106), et étant configuré de façon à réagir à un signal provenant du détecteur de concentration d'éthylène (108) pour déclencher ou inhiber le chauffage du réchauffeur de catalyseur (106).

8. Un appareil pour contrôler la concentration d'éthylène dans une installation pour le stockage de récoltes conforme à la revendication 7, dans lequel le générateur d'éthylène catalytique comprend un ou plusieurs clapets (103) pour réguler la décharge de précurseur d'éthylène dans le catalyseur (102), les clapets (103) étant actionnés par le contrôleur de concentration d'éthylène (104), le contrôleur de concentration d'éthylène (104) étant configuré de façon à ouvrir un clapet (103) pour ne décharger le précurseur d'éthylène dans le catalyseur (102) que lorsqu'un détecteur de température du catalyseur (105) indique au contrôleur de température du catalyseur (107) que la température du catalyseur se trouve à une température minimale du catalyseur ou au-dessus de celle-ci.

9. Un appareil pour contrôler la concentration d'éthylène dans une installation pour le stockage de récoltes conforme aux revendications 1 à 8, dans lequel le générateur d'éthylène catalytique comprend un ou plusieurs clapets (103) pour réguler la décharge de précurseur d'éthylène dans le catalyseur (102), les clapets (103) étant actionnés par le contrôleur de concentration d'éthylène (104), le contrôleur de concentration d'éthylène (104) réagissant au signal émis par le contrôleur de concentration d'éthylène (108) en ouvrant ou en fermant un clapet (103) pour décharger ou inhiber le précurseur d'éthylène dans le catalyseur (102).

10. Un appareil revendiqué dans une quelconque des revendications précédentes, comprenant un système de mesure pour mesurer le refoulement de précurseur d'éthylène dans le catalyseur (102).

11. Un appareil conforme à la revendication 10, dans lequel le système de mesure comprend une chambre d'injection (203) dotée d'un détecteur de capacité (204), la chambre d'injection (203) communiquant avec une fourniture (201) du précurseur à travers un premier clapet (202), ce premier clapet (202) réagissant à la sortie du détecteur de capacité (204) en se fermant lorsqu'un volume prédéterminé est atteint, et communiquant avec une chambre de catalyseur (207) à travers un deuxième clapet (206), les premier et deuxième clapet (202,206) pouvant être actionnés indépendamment l'un de l'autre.

12. Un appareil conforme à la revendication 11, dans lequel les premier et deuxième clapet (202,206) comprennent des électrovannes alimentées à travers un circuit de relais de commutation unique, de sorte qu'à tout moment donné, seul un des clapets (202,206) peut être ouvert.

13. Un appareil conforme à la revendication 12, dans lequel le contrôleur (104) est configuré de façon à ouvrir le deuxième clapet (206) avec une série d'impulsions, afin de vider progressivement la chambre d'injection (203) dans la chambre du catalyseur (207).

14. Un appareil conforme à la revendication 13, dans lequel le contrôleur (104) est configuré de façon à permettre le réglage de la fréquence et/ou de la période des impulsions.

15. Un appareil conforme à la revendication 14, dans lequel la fréquence et/ou la période des impulsions peut être ajustée activement en réponse au signal provenant du détecteur de concentration d'éthylène (108).

16. Un appareil revendiqué dans une quelconque des revendications précédentes, dans lequel le générateur d'éthylène comprend une chambre de catalyseur (207) comprenant une résistance intégrée à la chambre, cette résistance étant, en cours d'usage, incorporée dans le catalyseur.

17. Un appareil conforme à une quelconque des revendications 1 à 15, dans lequel le générateur d'éthylène comprend une chambre de catalyseur (207) tubulaire dotée de parois thermiquement conductrices et un réchauffeur placé sur l'extérieur des parois mais associé à ces dernières de façon à chauffer, en cours d'usage, le catalyseur par conduction à travers les parois de la chambre (207).

18. Un appareil revendiqué dans une quelconque des revendications précédentes, dans lequel le précurseur d'éthylène est de l'éthanol liquide.

19. Une installation pour le stockage de récoltes comprenant un appareil pour la régulation de la concentration d'éthylène dans une installation pour le stockage de récoltes, conformément à une quelconque des revendications précédentes.
